# EUROPÄISCHE PATENTSCHRIFT

(11) **EP 4 171 977 B1**
(45) Veröffentlichungstag und Bekanntmachung des Hinweises auf die Patenterteilung: **22.01.2025**
(21) Anmeldenummer: 20808065.5
(22) Anmeldetag: 16.11.2020
(51) Int. Cl.: B60H 1/00, B60H 1/14, B60H 1/32

(54) **THERMOMANAGEMENTSYSTEM FÜR EIN ELEKTROFAHRZEUG UND VERFAHREN ZU DESSEN BETRIEB**
THERMAL MANAGEMENT SYSTEM FOR AN ELECTRIC VEHICLE AND METHOD FOR OPERATING SAID THERMAL MANAGEMENT SYSTEM
SYSTÈME DE GESTION THERMIQUE POUR UN VÉHICULE ÉLECTRIQUE ET PROCÉDÉ DE FONCTIONNEMENT CORRESPONDANT

(30) Priorität: 24.06.2020 DE 102020116597; 24.09.2020 DE 102020124915
(43) Veröffentlichungstag der Anmeldung: 03.05.2023
(73) Patentinhaber: HELLA GmbH & Co. KGaA, 59552 Lippstadt (DE)
(72) Erfinder: TIEMEYER, Sebastian, 44143 Dortmund (DE)
(74) Vertreter: Behr-Wenning, Gregor
(86) Internationale Anmeldenummer: PCT/EP2020/082196
(87) Internationale Veröffentlichungsnummer: WO 2021/259513

(56) Entgegenhaltungen:
- WO-A1-2019/066330
- DE-T5- 112017 000 275
- US-A1- 2016 107 505
- US-A1- 2019 070 924

## Beschreibung

Die vorliegende Erfindung bezieht sich auf ein Thermomanagementsystem für ein Elektrofahrzeug der im Oberbegriff des Anspruchs 1 genannten Art und ein Verfahren zu dessen Betrieb.

Derartige Thermomanagementsysteme für Elektrofahrzeuge und Verfahren zu deren Betrieb sind aus dem Stand der Technik in zahlreichen Ausführungsvarianten bereits bekannt und umfassen eine Steuerung, einen mit einer Antriebsbatterie des Elektrofahrzeugs wärmeübertragend verbundenen Batteriekreislauf, einen mit einem Elektroantrieb des Elektrofahrzeugs und/oder einer Leistungselektronik für einen Elektroantrieb wärmeübertragend verbundenen Antriebskreislauf und einen mit einem Fahrzeuginnenraum des Elektrofahrzeugs wärmeübertragend verbundenen Klimatisierungskreislauf, wobei zum einen der Batteriekreislauf und der Antriebskreislauf jeweils mit einem Kühlmittel betreibbar und mittels mindestens eines ansteuerbaren Kühlmittelventils miteinander kühlmittelleitend verbindbar oder trennbar sind und zum anderen der Klimatisierungskreislauf mit einem von dem Kühlmittel verschiedenen Kältemittel betreibbar ist.

Beispielsweise ist aus der US 2020 276 879 A1 und deren vorveröffentlichem Familiendokument WO 2019/066330A1 ein derartiges und als integriertes Wärmemanagementsystem für ein Fahrzeug ausgebildetes Thermomanagementsystem bekannt. Das bekannte System umfasst einen Kältemittelkreislauf zum Kühlen oder Heizen eines Fahrzeuginnenraums des Fahrzeugs, je nachdem, ob das bekannte System in Abhängigkeit von einer Flussrichtung des Kältemittels in einem Air-Conditioner-Modus oder in einem Wärmepumpenmodus betrieben wird. Ferner umfasst das bekannte System einen Kühlwasserkreislauf zum Zirkulieren des Kühlwassers durch ein Elektro-Komponenten-Modul, einen wassergekühlten Wärmetauscher zum Wärmeaustausch zwischen dem Kältemittel auf der einen Seite und dem Kühlwasser auf der anderen Seite und eine Regeleinheit zur Regulierung des Kühlwasserflusses durch den Kühlwasserkreislauf.

Hier setzt die vorliegende Erfindung an.

Der vorliegenden Erfindung liegt die Aufgabe zugrunde, ein Thermomanagementsystem für ein Elektrofahrzeug und ein Verfahren zu dessen Betrieb zu verbessern.

Diese Aufgabe wird durch ein Thermomanagementsystem für ein Elektrofahrzeug mit den Merkmalen des Anspruchs 1 gelöst, das dadurch gekennzeichnet ist, dass das Thermomanagementsystem derart ausgebildet ist, dass sowohl der Wärmetauscher wie auch der Kühler zur Übertragung der Abwärme des Antriebskreislaufs, nämlich der Abwärme des Elektroantriebs und der Leistungselektronik, und der Abwärme des Batteriekreislaufs, nämlich der Abwärme der Antriebsbatterie, zur Erwärmung des Fahrzeuginnenraums des Elektrofahrzeugs zeitgleich nutzbar sind. Die vorgenannte Wärmeübertragungsverbindung ist also zwischen dem Klimatisierungskreislauf mit dem Kältemittel auf der einen Seite und mindestens einem der vorgenannten Kühlmittelkreisläufe, nämlich dem Batteriekreislauf und/oder dem Antriebskreislauf, herstellbar oder trennbar. Ferner wird diese Aufgabe durch ein Verfahren zum Betrieb eines Thermomanagementsystems für ein Elektrofahrzeug mit den Merkmalen des Anspruchs 7 gelöst. Bei dem Elektrofahrzeug kann es sich insbesondere um ein Kraftfahrzeug für den Straßenverkehr handeln. Ferner ist das Elektrofahrzeug in weiten geeigneten Grenzen frei wählbar und kann beispielsweise als ein Fahrzeug lediglich mit einem Elektroantrieb oder als ein Fahrzeug mit einem sogenannten Hybridantrieb, also einem Elektroantrieb und einem Verbrennungsmotor, ausgebildet sein. Die Unteransprüche betreffen vorteilhafte Weiterbildungen der Erfindung.

Ein wesentlicher Vorteil der Erfindung liegt insbesondere darin, dass ein Thermomanagementsystem für ein Elektrofahrzeug und ein Verfahren zu dessen Betrieb verbessert sind. Aufgrund der erfindungsgemäßen Ausbildung des Thermomanagementsystems für ein Elektrofahrzeug und des Verfahrens zu dessen Betrieb ist ein effizientes temperieren des Elektrofahrzeugs, nämlich der Antriebsbatterie, des Elektroantriebs und/oder der Leistungselektronik für den Elektroantrieb und/oder des Fahrzeuginnenraums des Elektrofahrzeugs, bei gleichzeitig vereinfachtem Aufbau des Thermomanagementsystems ermöglicht. Entsprechend ist beispielsweise ein Luft-Kältemittel-Kondensator in einer Fahrzeugfront des Elektrofahrzeugs entbehrlich. Ferner ist das erfindungsgemäße Thermomanagementsystem mit einem geringeren konstruktiven und fertigungstechnischen Aufwand sowie zu geringeren Kosten realisierbar. Die erfindungsgemäße Systemarchitektur insgesamt ist im Vergleich zu herkömmlichen technischen Lösungen wesentlich vereinfacht. Da die Wärmetauschervorrichtung mindestens ein Kältemittelventil und mindestens einen Wärmetauscher aufweist, wobei der Wärmetauscher in Abhängigkeit der Ansteuerung des Kältemittelventils mittels der Steuerung von Kältemittel durchströmbar ist oder nicht, ist die Herstellung oder Trennung der Wärmeübertragungsverbindung zwischen dem Klimatisierungskreislauf auf der einen Seite und mindestens einem der Kühlmittelkreisläufe auf der anderen Seite, also dem Batteriekreislauf und/oder dem Antriebskreislauf, auf einfache Art steuerbar. Darüber hinaus ist mittels des mindestens einen Kältemittelventils auch eine Wärmeübertragungsverbindung zwischen dem vorgenannten Wärmetauscher und einem Rest des Klimatisierungskreislaufs und auch zwischen diesem Wärmetauscher und dem zu temperierenden Fahrzeuginnenraum auf einfache Weise steuerbar.

Grundsätzlich ist das Thermomanagementsystem nach Art, Funktionsweise, Material, Dimensionierung und Anzahl der Komponenten sowie deren Anordnung zueinander und zu einem Rest des Elektrofahrzeugs in weiten geeigneten Grenzen frei wählbar.

Die Begriffe Steuerung und steuerbar sind erfindungsgemäß weit auszulegen und umfassen auch Regelungen oder Kombinationen aus einer Steuerung und einer Regelung.

Eine besonders vorteilhafte Weiterbildung des erfindungsgemäßen Thermomanagementsystems sieht vor, dass das Thermomanagementsystem zusätzlich einen kühlmittelbetriebenen Wärmetransferkreislauf aufweist, wobei mindestens einer des mindestens einen Wärmetauschers derart in dem Wärmetransferkreislauf angeordnet ist, dass mittels dieses Wärmetauschers eine Wärmeübertragungsverbindung zwischen dem in dem Wärmetransferkreislauf strömenden Kühlmittel und dem Kältemittel herstellbar oder trennbar ist, und wobei der Wärmetransferkreislauf mittels mindestens eines mittels der Steuerung ansteuerbaren weiteren Kühlmittelventils mit dem Batteriekreislauf und/oder dem Antriebskreislauf kühlmittelleitend verbindbar oder trennbar ist, bevorzugt, dass das Kühlmittelventil gleichzeitig als das weitere Kühlmittelventil ausgebildet ist. Hierdurch ist zum einen ein zusätzlicher Freiheitsgrad in der Herstellung oder der Trennung der Wärmeübertragungsverbindung zwischen dem Klimatisierungskreislauf auf der einen Seite und mindestens einem der Kühlmittelkreisläufe ermöglicht.

Entsprechend sieht eine vorteilhafte Weiterbildung des erfindungsgemäßen Verfahrens vor, dass mittels einer Ansteuerung des weiteren Kühlmittelventils mittels der Steuerung der Wärmetransferkreislauf mit dem Batteriekreislauf und/oder dem Antriebskreislauf kühlmittelleitend verbunden oder getrennt wird.

Somit lassen sich auch komplexere Thermomanagementsysteme auf konstruktiv, fertigungstechnisch und schaltungstechnisch einfache Art und Weise verwirklichen. Zum anderen ermöglicht die Verwendung des vorgenannten Wärmetransferkreislaufs die Herstellung oder Trennung einer zusätzlichen Wärmeübertragungsverbindung des in dem Wärmetransferkreislauf angeordneten Wärmetauschers beispielsweise mit einer freien Umgebung und/oder mit einem weiteren Kühlmittelkreislauf des Elektrofahrzeugs und/oder einem weiteren Kältemittelkreislauf des Elektrofahrzeugs.

Entsprechend sieht eine vorteilhafte Weiterbildung der vorgenannten Ausführungsform des erfindungsgemäßen Thermomanagementsystems vor, dass der Wärmetransferkreislauf derart ausgebildet ist, dass mittels des Wärmetransferkreislaufs eine Wärmeübertragungsverbindung zwischen dem in dem Wärmetransferkreislauf strömenden Kühlmittel und einer freien Umgebung herstellbar oder trennbar ist, bevorzugt, dass diese Wärmeübertragung an die freie Umgebung mittels des mindestens einen in dem Wärmetransferkreislauf angeordneten Wärmetauschers ermöglicht ist. Mittels der bevorzugten Ausführungsform dieser Weiterbildung ist dies beispielsweise auch ohne einen zusätzlichen Wärmetauscher technisch umsetzbar. Jedoch sind auch Ausbildungen dieser Weiterbildung denkbar, bei denen alternativ oder zusätzlich zu diesem Wärmetauscher in dem Wärmetransferkreislauf ein zusätzlicher Wärmetauscher verwendet wird.

Eine vorteilhafte Weiterbildung des erfindungsgemäßen Thermomanagementsystems nach Anspruch 3 sieht vor, dass das Thermomanagementsystem derart ausgebildet ist, dass zeitgleich Umgebungswärme aus der freien Umgebung über den Wärmetauscher und Abwärme von der Antriebsbatterie, dem Elektroantrieb und der Leistungselektronik über den Kühler zur Erwärmung des Fahrzeuginnenraums des Elektrofahrzeugs nutzbar sind.

Entsprechend sieht eine vorteilhafte Weiterbildung des erfindungsgemäßen Verfahrens vor, dass zeitgleich Umgebungswärme aus der freien Umgebung über den Wärmetauscher und Abwärme von der Antriebsbatterie, dem Elektroantrieb und der Leistungselektronik über den Kühler zur Erwärmung des Fahrzeuginnenraums des Elektrofahrzeugs genutzt werden.

Eine weitere vorteilhafte Weiterbildung des erfindungsgemäßen Thermomanagementsystems sieht vor, dass die Wärmetauschervorrichtung und/oder das Kühlmittelventil und/oder das weitere Kühlmittelventil derart aufeinander abgestimmt ausgebildet sind, dass der Batteriekreislauf und/oder der Antriebskreislauf auf der einen Seite mittels der Wärmetauschervorrichtung und des Klimatisierungskreislaufs und/oder des Wärmetransferkreislaufs auf der anderen Seite heizbar und/oder kühlbar sind/ist, und/oder, dass der Klimatisierungskreislauf auf der einen Seite mittels der Wärmetauschervorrichtung und des Batteriekreislaufs und/oder des Antriebskreislaufs und/oder des Wärmetransferkreislaufs auf der anderen Seite heizbar und/oder kühlbar ist. Hierdurch ist eine vielfältige Anwendung des erfindungsgemäßen Thermomanagementsystems zur Temperierung des Elektrofahrzeugs ermöglicht, so dass eine Vielzahl von Anwendungsfällen abdeckbar ist.

Eine andere vorteilhafte Weiterbildung des erfindungsgemäßen Thermomanagementsystems sieht vor, dass das Thermomanagementsystem in dem Batteriekreislauf und/oder dem Antriebskreislauf und/oder dem Klimatisierungskreislauf und/oder dem Wärmetransferkreislauf mindestens eine Bypass-Vorrichtung mit mindestens einer Bypass-Leitung und mindestens einem ansteuerbaren Bypass-Ventil aufweist, wobei mittels der jeweiligen Bypass-Vorrichtung ein in dem jeweiligen Kreislauf angeordneter Wärmetauscher in Abhängigkeit der Ansteuerung des Bypass-Ventils mittels der Steuerung durchströmbar ist oder nicht. Auf diese Weise ist die funktionale Komplexität des erfindungsgemäßen Thermomanagementsystems sowie die bedarfsgerechte Temperierung des einzelnen Kreislaufs weiter verbessert.

Entsprechend sieht eine weitere vorteilhafte Weiterbildung des erfindungsgemäßen Verfahrens vor, dass in Abhängigkeit einer Ansteuerung des Bypass-Ventils ein in dem jeweiligen Kreislauf mit Bypass-Vorrichtung angeordneter Wärmetauscher durchströmt wird oder nicht.

Ferner sieht eine besonders vorteilhafte Weiterbildung des erfindungsgemäßen Verfahrens vor, dass die Ansteuerung des Kühlmittelventils und/oder der Wärmetauschervorrichtung und/oder des weiteren Kühlmittelventils und/oder des Bypass-Ventils und/oder einer mittels der Steuerung ansteuerbaren Pumpe in einem der genannten Kühlmittelkreisläufe zur Förderung des Kühlmittels in diesem Kühlmittelkreislauf in Abhängigkeit eines Fahrzeugzustands des Elektrofahrzeugs und/oder eines Fahrzustands des Elektrofahrzeugs und/oder mindestens einer Umgebungsbedingung der freien Umgebung erfolgt. Hierdurch ist die Temperierung des Elektrofahrzeugs auf die jeweils vorherrschenden Bedingungen bei der Nutzung des Elektrofahrzeugs schaltungstechnisch sehr einfach anpassbar.

Anhand der beigefügten, grob schematischen Zeichnung wird die Erfindung nachfolgend näher erläutert. Dabei zeigt:
- Fig. 1: ein erstes Ausführungsbeispiel des erfindungsgemäßen Thermomanagementsystems für ein Elektrofahrzeug, in einem Blockschaltbild,
- Fig. 2: das erste Ausführungsbeispiel in einem ersten Betriebsmodus,
- Fig. 3: das erste Ausführungsbeispiel in einem zweiten Betriebsmodus,
- Fig. 4: ein zweites Ausführungsbeispiel des erfindungsgemäßen Thermomanagementsystems für ein Elektrofahrzeug, in einem Blockschaltbild und
- Fig. 5: ein drittes Ausführungsbeispiel des erfindungsgemäßen Thermomanagementsystems für ein Elektrofahrzeug, in einem Blockschaltbild.

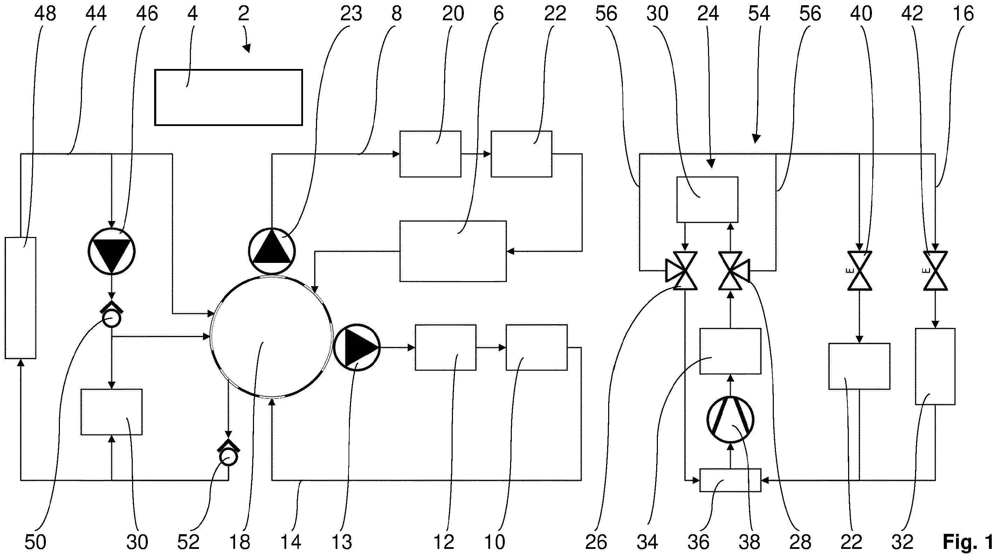

In den Fig. 1 bis 3 ist ein erstes Ausführungsbeispiel des erfindungsgemäßen Thermomanagementsystems für ein Elektrofahrzeug zur Durchführung des erfindungsgemäßen Verfahrens rein exemplarisch dargestellt.

Das nicht dargestellte Elektrofahrzeug ist bei dem vorliegenden Ausführungsbeispiel als ein reines Elektrofahrzeug ausgebildet.

Das Thermomanagementsystem 2 für das Elektrofahrzeug umfasst eine Steuerung 4, einen mit einer Antriebsbatterie 6 des Elektrofahrzeugs wärmeübertragend verbundenen Batteriekreislauf 8, einen mit einem Elektroantrieb 10 des Elektrofahrzeugs und einer Leistungselektronik 12 für den Elektroantrieb 10 wärmeübertragend verbundenen Antriebskreislauf 14 und einen mit einem nicht dargestellten Fahrzeuginnenraum des Elektrofahrzeugs wärmeübertragend verbundenen Klimatisierungskreislauf 16, wobei zum einen der Batteriekreislauf 8 und der Antriebskreislauf 14 jeweils mit einem nicht dargestellten Kühlmittel betreibbar und mittels mindestens eines ansteuerbaren Kühlmittelventils 18 miteinander kühlmittelleitend verbindbar oder trennbar sind und zum anderen der Klimatisierungskreislauf 16 mit einem von dem Kühlmittel verschiedenen, nicht dargestellten Kältemittel betreibbar ist. Das Kühlmittelventil 18 ist bei dem vorliegenden Ausführungsbeispiel als ein einziges Multi-Wege-Ventil ausgebildet. Jedoch sind auch andere Ausbildungen des mindestens einen Kühlmittelventils denkbar. Beispielsweise kann das mindestens eine Kühlmittelventil als eine Mehrzahl von miteinander auf dem Fachmann bekannte Weise verschalteten Ventilen ausgebildet sein.

In dem Batteriekreislauf 8 sind neben der Antriebsbatterie 6 ferner eine PTC-Heizung 20, ein Kühler 22, nämlich ein sogenannter Chiller, und eine Kühlmittelpumpe 23 angeordnet. Die Antriebsbatterie 6 dient auf dem Fachmann bekannte Weise zur Versorgung des Elektroantriebs 10 mit elektrischem Strom. Der Elektroantrieb 10 ist auf dem Fachmann bekannte Weise zur Fortbewegung des Elektrofahrzeugs ausgebildet. Der Antriebskreislauf 14 umfasst neben dem Elektroantrieb 10 und der dazu korrespondierenden Leistungselektronik 12, analog zu dem Batteriekreislauf 8, eine Kühlmittelpumpe 13.

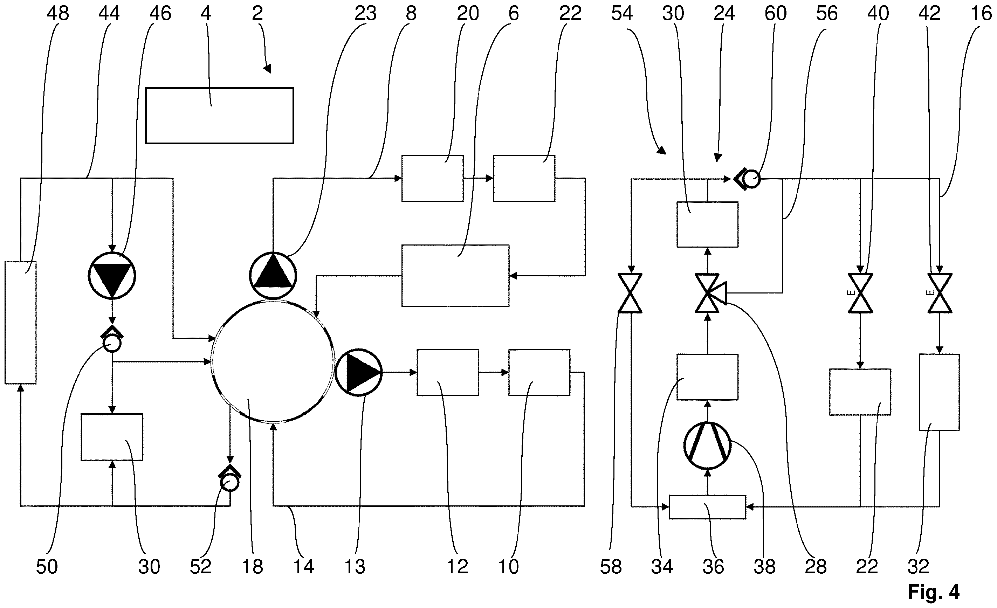

Zwischen dem Batteriekreislauf 8 und/oder dem Antriebskreislauf 14 auf der einen Seite und dem Klimatisierungskreislauf 16 auf der anderen Seite ist mittels mindestens einer Wärmetauschervorrichtung 24 des Thermomanagementsystems 2 in Abhängigkeit einer Ansteuerung des Kühlmittelventils 18 und einer Ansteuerung der Wärmetauschervorrichtung 24 mittels der Steuerung 4 eine Wärmeübertragungsverbindung herstellbar oder trennbar. Dies wird im Nachfolgenden noch näher erläutert. Die Wärmetauschervorrichtung 24 weist zwei Kältemittelventile 26, 28 und einen Wärmetauscher 30 auf, wobei der Wärmetauscher 30 in Abhängigkeit der Ansteuerung der Kältemittelventile 26, 28 mittels der Steuerung 4 von Kältemittel durchströmbar ist oder nicht. Die Kältemittelventile 26, 28 sind hier jeweils als ein 3/2-Wege-Ventil ausgebildet. Alternativ können die beiden 3/2-Wege-Ventile 26, 28 durch ein einziges 6/2-Wege-Ventil ersetzt werden. Selbstverständlich sind auch andere Varianten denkbar. Siehe hierzu beispielsweise auch das zweite Ausführungsbeispiel gemäß der Fig. 4.

Wie aus der Fig. 1 ferner hervorgeht, sind in dem Klimatisierungskreislauf 16 neben der Wärmetauschervorrichtung 24 noch der Kühler 22, ein Verdampfer 32, ein Verflüssiger 34, ein Akkumulator 36, ein Kompressor 38 und zwei Ventile 40, 42 angeordnet. Der Kühler 22 ist entsprechend sowohl in dem Batteriekreislauf 8 wie auch in dem Klimatisierungskreislauf 16 angeordnet. Analog zu der Wärmetauschervorrichtung 24 ist mittels des Kühlers 22 in Abhängigkeit einer Ansteuerung des Kühlmittelventils 18 und einer Ansteuerung des Ventils 40 mittels der Steuerung 4 eine Wärmeübertragungsverbindung zwischen dem Klimatisierungskreislauf 16 auf der einen Seite und dem Batteriekreislauf 8 auf der anderen Seite herstellbar oder trennbar. Der Kühler 22 ist in Abhängigkeit der Ansteuerung des Ventils 40 mittels der Steuerung 4 von Kältemittel durchströmbar oder nicht. Siehe hierzu die Fig. 1. Die übrige Funktion des Klimatisierungskreislaufs 16 entspricht ansonsten dem von üblichen Kältemittelkreisläufen.

Das Thermomanagementsystem 2 weist bei dem vorliegenden Ausführungsbeispiel zusätzlich einen kühlmittelbetriebenen Wärmetransferkreislauf 44 auf, wobei der Wärmetauscher 30 derart in dem Wärmetransferkreislauf 44 angeordnet ist, dass mittels dieses Wärmetauschers 30 eine Wärmeübertragungsverbindung zwischen dem in dem Wärmetransferkreislauf 44 strömenden, nicht dargestellten Kühlmittel und dem Kältemittel herstellbar oder trennbar ist. Der Wärmetauscher 30 ist entsprechend sowohl in dem Wärmetransferkreislauf 44 wie auch in dem Klimatisierungskreislauf 16 angeordnet. Der Wärmetransferkreislauf 44 ist mittels mindestens eines mittels der Steuerung 4 ansteuerbaren weiteren Kühlmittelventils mit dem Batteriekreislauf 8 und/oder dem Antriebskreislauf 14 kühlmittelleitend verbindbar oder trennbar, wobei das Kühlmittelventil 18 hier gleichzeitig als das weitere Kühlmittelventil ausgebildet ist. Ferner sind in dem Wärmetransferkreislauf 44 neben dem Wärmetauscher 30 der Wärmetauschervorrichtung 24, analog zu dem Batteriekreislauf 8 und dem Antriebskreislauf 14, eine Kühlmittelpumpe 46, ein als Radiator ausgebildeter Wärmetauscher 48 sowie zwei Rückschlagventile 50, 52 angeordnet. Der Wärmetransferkreislauf 44 ist mittels des als Radiator ausgebildeten Wärmetauschers 48 derart ausgebildet, dass eine Wärmeübertragungsverbindung zwischen dem in dem Wärmetransferkreislauf 44 strömenden Kühlmittel und einer nicht dargestellten freien Umgebung herstellbar oder trennbar ist.

Die Wärmetauschervorrichtung 24 und das Kühlmittelventil 18 sind derart aufeinander abgestimmt ausgebildet, dass der Batteriekreislauf 8 und/oder der Antriebskreislauf 14 auf der einen Seite mittels der Wärmetauschervorrichtung 24, des Klimatisierungskreislaufs 16 und des Wärmetransferkreislaufs 44 auf der anderen Seite heizbar und/oder kühlbar sind, und umgekehrt, nämlich, dass der Klimatisierungskreislauf 16 auf der einen Seite mittels der Wärmetauschervorrichtung 24 und des Batteriekreislaufs 8 und/oder des Antriebskreislaufs 14 sowie des Wärmetransferkreislaufs 44 auf der anderen Seite heizbar und/oder kühlbar ist.

Um der funktionalen Komplexität des Thermomanagementsystem gemäß dem vorliegenden Ausführungsbeispiel gerecht zu werden, weist das Thermomanagementsystem 2 in dem Klimatisierungskreislauf 16 eine Bypass-Vorrichtung 54 mit einer Bypass-Leitung 56 und zwei ansteuerbaren Bypass-Ventilen auf, wobei die Kältemittelventile 26, 28 hier als die Bypass-Ventile ausgebildet sind. Mittels der Bypass-Vorrichtung 54 ist der in dem Klimatisierungskreislauf 16 angeordnete Wärmetauscher 30 in Abhängigkeit der Ansteuerung der Kältemittelventile 26, 28 mittels der Steuerung 4 in gewünschter Weise durchströmbar oder nicht.

Das vorgenannte Kühlmittelventil 18 und/oder die vorgenannten Kältemittelventile 26, 28 und/oder die Ventile 40, 42 können dabei derart ausgebildet und mittels der Steuerung 4 ansteuerbar sein, dass das jeweilige Ventil 18, 26, 28, 40, 42 nicht lediglich eine Kühlmittelleitung eines der Kühlmittelkreisläufe 8, 14, 44 oder eine Kältemittelleitung des Kältemittelkreislaufs 16 sperrt oder freigibt, sondern, es kann auch vorgesehen sein, dass mindestens eines der vorgenannten Ventile 18, 26, 28, 40, 42 die korrespondierende Kühlmittelleitung oder Kältemittelleitung teilweise sperrt oder öffnet, so dass das darin strömende Kühlmittel oder Kältemittel in dieser Kühlmittelleitung oder Kältemittelleitung mit einem verminderten Volumenstrom, also gedrosselt, strömt.

Entsprechend sind auch Mischungen des Kühlmittels mit unterschiedlichen Termperaturniveaus mittels der vorgenannten Ventile 18, 26, 28, 40, 42 einstellbar. Analoges gilt für das Kältemittel.

Im Nachfolgenden wird die Funktionsweise des erfindungsgemäßen Thermomanagementsystems und das erfindungsgemäße Verfahren zu dessen Betrieb gemäß dem vorliegenden Ausführungsbeispiel und anhand der Fig. 1 bis 3 näher erläutert.

Mittels des Thermomanagementsystems 2 des Elektrofahrzeugs ist es möglich, den Batteriekreislauf 8 mittels des Kühlers 22 zu kühlen und mittels des PTC-Heizers 20 zu heizen. Die Abwärme der Antriebsbatterie 6 kann zur Heizung des Fahrzeuginnenraums verwendet werden, wobei diese Abwärme und/oder die vom PTC-Heizer 20 erzeugte Wärme über den Kühler 22 an den Klimatisierungskreislauf 16 übertragen werden kann. Abwärme von dem Antriebskreislauf 14, nämlich der Leistungselektronik 12 und des Elektroantriebs 10, kann an das Kühlmittel zwecks anschließender Abgabe dieser Abwärme an den Wärmetransferkreislauf 44 und/oder an den Batteriekreislauf 8 zur direkten Heizung der Antriebsbatterie 6 und/oder zur Heizung des Fahrzeuginnenraums mittels des Kühlers 22, abgegeben werden. Der Klimatisierungskreislauf 16 ist mittels des Verdampfers 32 zur Kühlung und mittels des Verflüssigers 34 zur Heizung des Fahrzeuginnenraums einsetzbar. Der Wärmetransferkreislauf 44 dient bei dem vorliegenden Ausführungsbeispiel zur Kühlung und zur Heizung des Batteriekreislaufs 8 und/oder des Antriebskreislaufs 14 und/oder, mittels des Klimatisierungskreislaufs 16, des Innenraums. Die Kühlung erfolgt dabei beispielsweise mittels des als Radiator ausgebildeten Wärmetauschers 48, also durch Wärmeabgabe an die freie Umgebung und/oder mittels des Wärmetauschers 30. Die Heizung erfolgt dabei beispielsweise mittels des als Radiator ausgebildeten Wärmetauschers 48, also durch Wärmeaufnahme aus der freien Umgebung und/oder mittels des Wärmetauschers 30.

Je nach Zustand des jeweiligen Kühlmittelkreislaufs 8, 14 oder des Kältemittelkreislaufs 16 und unter Berücksichtigung des Fahrzeugzustands und/oder der Fahrsituation und/oder der Umgebungsbedingungen, beispielsweise der Umgebungstemperatur, können die verschiedenen Kreisläufe 8, 14, 16, 44 Wärmequellen oder Wärmesenken darstellen.

Die Effizienz des Thermomanagementsystems 2 als Ganzes kann durch ein bedarfsgerechtes wärmetechnisches Verbinden oder Trennen der einzelnen Kreisläufe 8, 14, 16, 44 verbessert werden. Beispielsweise kann während der Fahrt des Elektrofahrzeugs die Antriebsbatterie 6 im kalten Zustand effizient durch die Abwärme des Elektroantriebs 10 aufgewärmt werden. Hierzu muss der Batteriekreislauf 8 mittels des Kühlmittelventils 18 mit dem Antriebskreislauf 14 kühlmittelleitend verbunden werden. Bei sehr hohen Umgebungstemperaturen ist jedoch ein Trennen von Batteriekreislauf 8 und Antriebskreislauf 14 zwingend erforderlich, damit ausschließlich die hitzeempfindliche Antriebsbatterie 6 durch den Kühler 22 gekühlt werden kann.

Durch das Kältemittelventil 28 in einer ersten Schaltstellung, nämlich dahingehend, dass das Kältemittelventil 28 zum Wärmetauscher 30 komplett geöffnet ist und die Bypass-Leitung 56 geöffnet ist, fungiert der Wärmetauscher 30 als Wärmequelle für den Wärmetransferkreislauf 44. Wärme wird also vom Klimatisierungskreislauf 16 an den Wärmetransferkreislauf 44 übertragen und von dort entweder mittels des als Radiator ausgebildeten Wärmetauschers 48 an die freie Umgebung oder mittels des Kältemittelventils 18 und des Batteriekreislaufs 8 beispielsweise an die Antriebsbatterie 6 übertragen. Hierdurch kann beispielsweise auf einen großen Kondensator in einer Fahrzeugfront des Elektrofahrzeugs verzichtet werden, da die Übertragung der Abwärme aus dem Klimatisierungskreislauf 16 durch den Wärmetauscher 30 gewährleistet wird. Infolgedessen erlaubt der selektiv ankoppelbare Wärmetransferkreislauf 44 neben der Realisierung verschiedenster Betriebsmodi des Thermomanagementsystems 2 eine Vereinfachung des Klimatisierungskreislaufs 16.

In einer zweiten Schaltstellung des Kältemittelventils 28, in der ein Durchfluss des Kältemittels durch das Kältemittelventil 28 gedrosselt ist, entsteht durch die Verjüngung im Kältemittelventil 28 ein Niederdruckbereich für den Wärmetauscher 30, so dass dieser nun analog dem Kühler 22 arbeitet. Der Wärmetauscher 30 überträgt also Wärme aus dem Wärmetransferkreislauf 44 an den Klimatisierungskreislauf 16. Dies wird beispielsweise genutzt, um der freien Umgebung, also der Umgebungsluft, Wärme zur Temperierung des Fahrzeuginnenraums zu entziehen. Hierfür transferiert der Wärmetauscher 30 solange Wärme aus dem Wärmetransferkreislauf 44 an den Klimatisierungskreislauf 16, bis die Temperatur in dem Wärmetransferkreislauf 44 unter die Umgebungstemperatur, also die Temperatur der freien Umgebung, fällt. Hierdurch wird das nun kältere Kühlmittel in dem Wärmetransferkreislauf 44 beim Passieren des als Radiator ausgebildeten Wärmetauschers 48 durch die Umgebungsluft auf die Umgebungstemperatur aufgewärmt. Anschließend kann der Wärmetauscher 30 dem Kühlmittel in dem Wärmetransferkreislauf 44 erneut Wärme entziehen, welche über den Verflüssiger 34 im Klimatisierungskreislauf 16 an den Fahrzeuginnenraum übertragen wird. Zusätzlich sind in diesem Betriebsmodus des Thermomanagementsystems 2 der Batteriekreislauf 8 und der Antriebskreislauf 14 kühlmittelleitend verbunden, sodass die Abwärme der Antriebsbatterie 6, des Elektroantriebs 10 sowie der Leistungselektronik 12 über den Kühler 22 ebenfalls an den Fahrzeuginnenraum übertragen werden kann.

Unter Berücksichtigung aller denkbaren Fahrzeugzustände, Fahrzustände und Umgebungsbedingungen ergeben sich eine Vielzahl an denkbaren Verbindungen und Trennungen, also Betriebsmodi des Thermomanagementsystems 2, zwischen dem Batteriekreislauf 8, dem Antriebskreislauf 14 und dem Klimatisierungskreislauf 16. Aufgrund der erfindungsgemäßen Ausbildung des Thermomanagementsystems 2 wird dadurch, im Unterschied zu üblichen Thermomanagementsystemen für Elektrofahrzeuge, die konstruktive, fertigungstechnische und schaltungstechnische Komplexität des erfindungsgemäßen Thermomanagementsystems, also beispielsweise die Anzahl der benötigten Kühlmitteleitungen und Kältemittelleitungen sowie die Anzahl der erforderlichen Kühlmittelventile und Kältemittelventile, im Vergleich zu weniger funktionalen Thermomanagementsystemen, gar nicht oder weniger umfangreich erhöht.

Der Klimatisierungskreislauf 16 kann zur Aufheizung des Fahrzeuginnenraums mittels des Kühlers 22 Wärme aus dem Batteriekreislauf 8 entnehmen. Bei sehr niedrigen Außentemperaturen, beispielsweise bei Umgebungstemperaturen von kleiner -10 °C, stellt der PTC-Heizer 20 die einzige Wärmequelle beim Start des Elektrofahrzeugs dar. Jedoch ist die Effizienz des Wärmetransfers vom PTC-Heizer 20 über den Kühler 22 in den Klimatisierungskreislauf 16 durch die sehr geringe Kühlmitteltemperatur limitiert. Aus diesem Grund wird bei diesen Umgebungsbedingungen die Kühlmittelpumpe 23 im Batteriekreislauf 8 in einem besonders langsamen Fördermodus betrieben. Hierdurch fließt pro Zeit eine nur geringe Kühlmittelmenge durch den PTC-Heizer 20, so dass dieses Kühlmittel auf eine vorteilhaft hohe Temperatur erhitzt werden kann, um so diesem Kühlmittel mittels des Kühlers 22 effizient Wärme zur Temperierung des Fahrzeuginnenraums entziehen zu können.

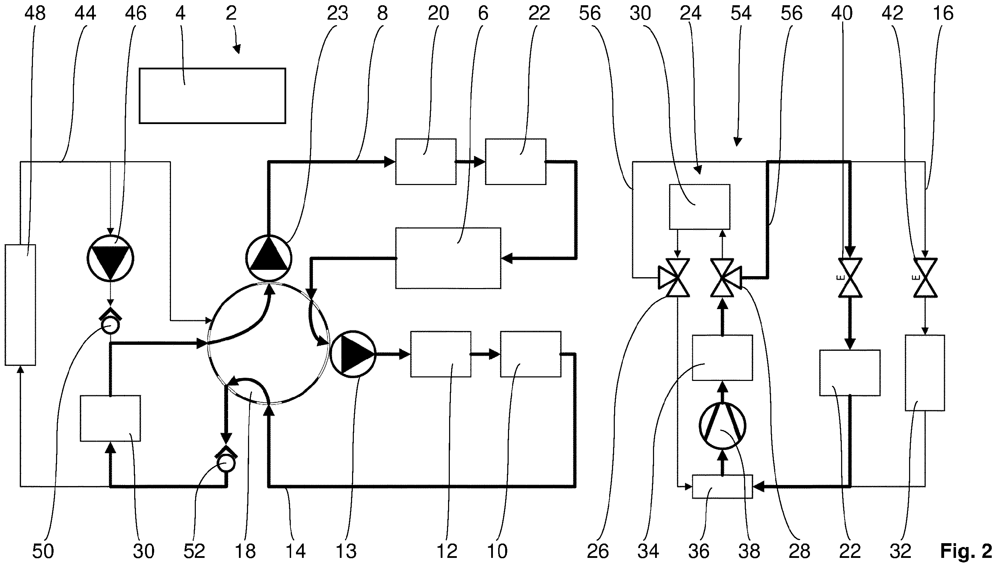

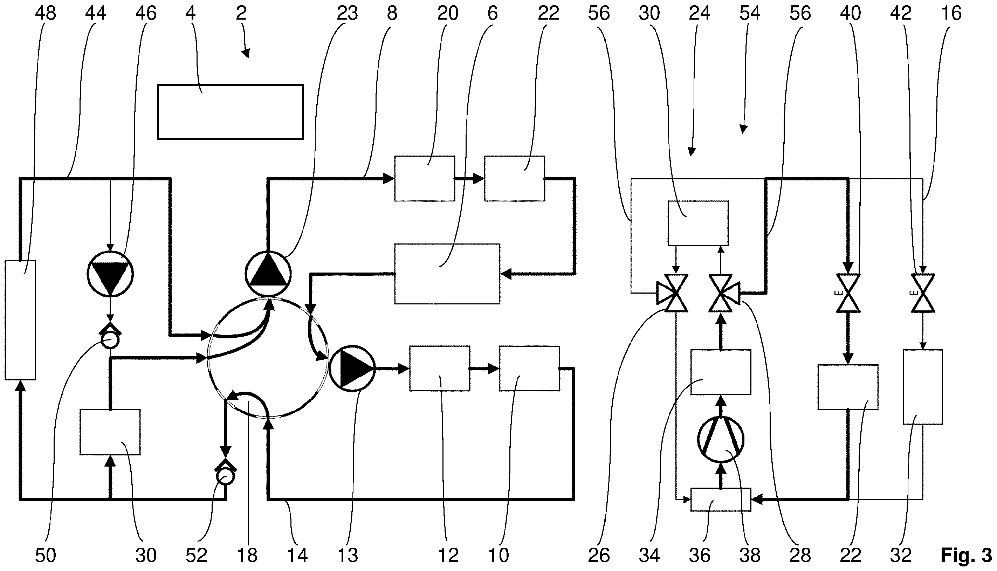

Beispielhaft wird die Verwendung des Thermomanagementsystems 2 nachfolgend anhand der Betriebsmodi des Thermomanagementsystems 2 gemäß der Fig. 2 und 3 dargestellt, wobei die mit Kühlmittel durchströmten Kühlmittelleitungen der Kühlmittelkreisläufe 8, 14, 44 oder die mit Kältemittel durchströmten Kältemittelleitungen des als Kältemittelkreislauf ausgebildeten Klimatisierungskreislaufs 16 in den Fig. 2 und 3 mit dicken Linien hervorgehoben sind.

Beispielsweise ist es möglich, sowohl den Wärmetauscher 30 wie auch den Kühler 22 zur Übertragung der Abwärme des Antriebskreislaufs 14, nämlich der Abwärme des Elektroantriebs 10 und der Leistungselektronik 12, und der Abwärme des Batteriekreislaufs 8, nämlich der Abwärme der Antriebsbatterie 6, zu nutzen.

In dem Betriebsmodus gemäß der Fig. 2 wird lediglich der Kühler 22 zur Übertragung der Abwärme des Antriebskreislaufs 14, nämlich der Abwärme des Elektroantriebs 10 und der Leistungselektronik 12, und der Abwärme des Batteriekreislaufs 8, nämlich der Abwärme der Antriebsbatterie 6, genutzt.

Zusätzlich kann durch ein proportionales Mischen der einzelnen Kühlmittelströme zwischen dem als Radiator ausgebildeten Wärmetauscher 48 und dessen Bypass ein Teil der Abwärme des Antriebskreislaufs 14 an die freie Umgebung abgegeben werden. Dies kann vorteilhaft sein, um eine gleichbleibende Heizleistung bei der Beheizung des Fahrzeuginnenraums mittels des Klimatisierungskreislaufs 16 bei dynamischem Fahrbetrieb des Elektrofahrzeugs, beispielsweise bei einer temporär zu großen Abwärmeleistung des Batteriekreislaufs 8 und/oder des Antriebskreislaufs 14, zu gewährleisten. Siehe hierzu die Fig. 3.

Neben den vorgenannten Betriebsmodi sind mittels des Thermomanagementsystems 2 gemäß der Fig. 1 bis 3 noch weitere Betriebsmodi realisierbar.

Rein exemplarisch seien hier die folgenden weiteren Betriebsmodi genannt:
Beispielsweise kann ein Betriebsmodus des Thermomanagementsystems 2 vorsehen, zeitgleich Umgebungswärme aus der freien Umgebung über den Wärmetauscher 30 und Abwärme von der Antriebsbatterie 6, dem Elektroantrieb 10 und der Leistungselektronik 12 über den Kühler 22 zur Erwärmung des Fahrzeuginnenraums des Elektrofahrzeugs zu nutzen.

In einem anderen Beispiel für einen möglichen Betriebsmodus wird der Wärmetauscher 30 zur Übertragung der Abwärme aus dem Antriebskreislauf 14 mittels des Wärmetauschers 48 an die freie Umgebung und mittels des Wärmetauschers 30 an den Klimatisierungskreislauf 16 verwendet, während mittels des Kühlers 22 die Abwärme der Antriebsbatterie 6 an den Klimatisierungskreislauf 16 transferiert wird. Hierdurch kann für den Batteriekreislauf 8 und den Antriebskreislauf 14 jeweils die optimale Temperatur eingestellt werden, nämlich beispielsweise ein im Vergleich zum Batteriekreislauf 8 höheres Temperaturniveau für den Antriebskreislauf 14, als bei gemeinsamer Nutzung des Kühlers 22 möglich wäre.

Ferner kann in einem weiteren Betriebsmodus des Thermomanagementsystems 2 sowohl die Abwärmeleistung des PTC-Heizers 20 im Batteriekreislauf 8 wie auch die Verlustwärme des Kompressors 38 im Klimatisierungskreislauf 16 zur Erwärmung des Fahrzeuginnenraums des Elektrofahrzeugs genutzt werden. Hierzu sind der Wärmetransferkreislauf 44 und der Batteriekreislauf 8 mittels des Kühlmittelventils 18 miteinander kühlmittelleitend verbunden. Der PTC-Heizer 20 erwärmt das Kühlmittel des Batteriekreislaufs 8, wobei diesem Kühlmittel direkt danach durch den Kühler 22 wieder Wärme entzogen wird. Diese Wärme wird nur teilweise über den Verflüssiger 34 an den Fahrzeuginnenraum des Elektrofahrzeugs abgegeben. Der verbleibende Teil der Wärme wird durch den Wärmetauscher 30 wieder mindestens einem der Kühlmittelkreisläufe 8, 14, 44 zugeführt. Infolgedessen bildet die Verbindung des Wärmetauschers 30 mit dem Kühler 22 mittels des Klimatisierungskreislaufs 16 einen geschlossenen Wärmekreislauf. Im Grenzfall, nämlich, wenn keine Wärme von dem Verflüssiger 34 an den Fahrzeuginnenraum des Elektrofahrzeugs abgeführt wird, transferiert der Wärmetauscher 30 die gleiche Wärmemenge an das Kühlmittel, welche der Kühler 22 diesem Kühlmittel zuvor entzogen hat. Zur Aufrechterhaltung dieses Wärmekreislaufs muss der Kompressor 38 hydraulische Arbeit leisten. Diese Arbeit und die damit einhergehende Verlustwärme des Kompressors 38 steigt an, je größer die zirkulierende Wärmemenge wird. Die Verlustwärme des Kompressors 38 wird über das Kältemittel abgeführt und erhöht infolgedessen den Wärmetransfer in das Kühlmittel zusätzlich. Demnach addiert sich in diesem Betriebsmodus die Verlustwärme des Kompressors 38 zu der Wärmeleistung des PTC-Heizers 20, sodass eine besonders hohe Heizleistung für eine schnelle Erwärmung von Antriebsbatterie 6 und/oder Fahrzeuginnenraum des Elektrofahrzeugs zur Verfügung steht.

Wie aus den obigen Ausführungen deutlich hervorgeht, wird in Abhängigkeit einer Ansteuerung des Kühlmittelventils 18 und einer Ansteuerung der Wärmetauschervorrichtung 24 mittels der Steuerung 4 eine Wärmeübertragungsverbindung zwischen dem Batteriekreislauf 8 und/oder dem Antriebskreislauf 14 auf der einen Seite und dem Klimatisierungskreislauf 16 auf der anderen Seite mittels der mindestens einen Wärmetauschervorrichtung 24 hergestellt oder getrennt. Ferner wird mittels einer Ansteuerung des gleichzeitig als weiteres Kühlmittelventil ausgebildeten Kühlmittelventils 18 mittels der Steuerung 4 der Wärmetransferkreislauf 44 mit dem Batteriekreislauf 8 und/oder dem Antriebskreislauf 14 kühlmittelleitend verbunden oder getrennt. In Abhängigkeit einer Ansteuerung der gleichzeitig als Bypass-Ventile ausgebildeten Kältemittelventile 26, 28 ist es darüber hinaus möglich, den in dem Klimatisierungskreislauf 16 angeordneten Wärmetauscher 30 mit Kältemittel zu durchströmen oder nicht. Analoges gilt für den Kühler 22 und das diesem zugeordnete Ventil 40. Die Ansteuerung des Kühlmittelventils 18 und/oder der Wärmetauschervorrichtung 24 und/oder der Kältemittelventile 26, 28 und/oder der mittels der Steuerung 4 ansteuerbaren Kühlmittelpumpen 13, 23, 46 in einem der genannten Kühlmittelkreisläufe 8, 14, 44 zur Förderung des Kühlmittels in diesem Kühlmittelkreislauf 8, 14, 44 erfolgt in Abhängigkeit eines Fahrzeugzustands des Elektrofahrzeugs und/oder eines Fahrzustands des Elektrofahrzeugs und/oder mindestens einer Umgebungsbedingung der freien Umgebung.

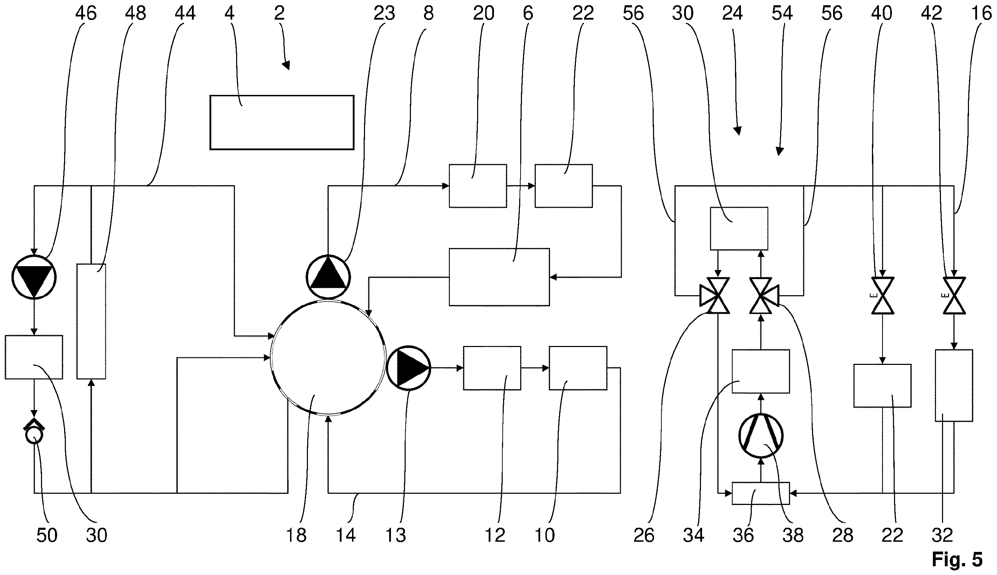

In den Fig. 4 und 5 sind zwei zu dem ersten Ausführungsbeispiel gemäß der Fig. 1 bis 3 alternative Ausführungsformen des erfindungsgemäßen Thermomanagementsystems beispielhaft dargestellt. Selbstverständlich sind auch andere konstruktive, fertigungstechnische und schaltungstechnische Abänderungen denkbar.

In dem zweiten Ausführungsbeispiel des erfindungsgemäßen Thermomanagementsystems gemäß der Fig. 4 ist die Wärmetauschervorrichtung 24, bestehend aus dem Wärmetauscher 30 und den Kältemittelventilen 26, 28, im Vergleich zu dem ersten Ausführungsbeispiel gemäß der Fig. 1 bis 3 modifiziert. Anstelle von zwei 3/2-WegeVentilen wurde hier eines der 3/2-Wege-Ventile, nämlich das Kältemittelventil 26, durch ein Einwegeventil 58 und ein Rückschlagventil 60 ersetzt. Ansonsten entspricht das zweite Ausführungsbeispiel dem ersten Ausführungsbeispiel. Entsprechend wird hier diesbezüglich auf die obigen Ausführungen zu dem ersten Ausführungsbeispiel verwiesen.

Das dritte Ausführungsbeispiel gemäß der Fig. 5 ist eine Ausführungsform des erfindungsgemäßen Thermomanagementsystems, bei dem der Funktionsumfang und damit die Komplexität des Thermomanagementsystems gegenüber den beiden erstgenannten Ausführungsbeispielen reduziert ist. Der Vorteil dieses dritten Ausführungsbeispiels besteht insbesondere darin, dass das Kühlmittelventil vereinfacht und damit kostengünstiger ausgebildet sein kann. Der Klimatisierungskreislauf 16 entspricht hier dem ersten Ausführungsbeispiel, jedoch ist hier der Wärmetransferkreislauf 44 im Vergleich zu den ersten und dem zweiten Ausführungsbeispiel modifiziert.

Aufgrund der erfindungsgemäßen Ausbildung des Thermomanagementsystems für ein Elektrofahrzeug und des Verfahrens zu dessen Betrieb gemäß den vorliegenden Ausführungsbeispielen ist ein effizientes Temperieren des Elektrofahrzeugs, nämlich der Antriebsbatterie 6, des Elektroantriebs 10 und der Leistungselektronik 12 für den Elektroantrieb 10 und des Fahrzeuginnenraums des Elektrofahrzeugs, bei gleichzeitig vereinfachtem Aufbau des Thermomanagementsystems 2 ermöglicht. Entsprechend ist beispielsweise ein Luft-Kältemittel-Kondensator in einer Fahrzeugfront des Elektrofahrzeugs entbehrlich. Ferner ist das Thermomanagementsystem 2 mit einem geringeren konstruktiven und fertigungstechnischen Aufwand sowie zu geringeren Kosten realisierbar. Die erfindungsgemäße Systemarchitektur insgesamt ist im Vergleich zu herkömmlichen technischen Lösungen wesentlich vereinfacht.

Die Erfindung ist nicht auf die vorliegenden Ausführungsbeispiele begrenzt. Beispielsweise ist die Erfindung auch bei anderen Elektrofahrzeugen vorteilhaft einsetzbar. Siehe hierzu auch die Ausführungen in der Beschreibungseinleitung.

Insbesondere ist die Erfindung nicht auf die konstruktive, fertigungstechnische und schaltungstechnische Ausbildung der drei Ausführungsbeispiele beschränkt.

## Patentansprüche

1. Thermomanagementsystem (2) für ein Elektrofahrzeug, umfassend eine Steuerung (4), einen mit einer Antriebsbatterie (6) des Elektrofahrzeugs wärmeübertragend verbundenen Batteriekreislauf (8), einen mit einem Elektroantrieb (10) des Elektrofahrzeugs und/oder einer Leistungselektronik (12) für einen Elektroantrieb (10) wärmeübertragend verbundenen Antriebskreislauf (14) und einen mit einem Fahrzeuginnenraum des Elektrofahrzeugs wärmeübertragend verbundenen Klimatisierungskreislauf (16), wobei zum einen der Batteriekreislauf (8) und der Antriebskreislauf (14) jeweils mit einem Kühlmittel betreibbar und mittels mindestens eines ansteuerbaren Kühlmittelventils (18) miteinander kühlmittelleitend verbindbar oder trennbar sind und zum anderen der Klimatisierungskreislauf (16) mit einem von dem Kühlmittel verschiedenen Kältemittel betreibbar ist, und wobei eine Wärmeübertragungsverbindung zwischen dem Batteriekreislauf (8) und/oder dem Antriebskreislauf (14) auf der einen Seite und dem Klimatisierungskreislauf (16) auf der anderen Seite mittels mindestens einer Wärmetauschervorrichtung (24) des Thermomanagementsystems (2) in Abhängigkeit einer Ansteuerung des Kühlmittelventils (18) und einer Ansteuerung der Wärmetauschervorrichtung (24) mittels der Steuerung (4) herstellbar oder trennbar ist, nämlich derart, dass die Wärmetauschervorrichtung (24) mindestens ein Kältemittelventil (26, 28) und mindestens einen Wärmetauscher (30) aufweist, wobei der Wärmetauscher (30) in Abhängigkeit der Ansteuerung des Kältemittelventils (26, 28) mittels der Steuerung (4) von Kältemittel durchströmbar ist oder nicht, und wobei in dem Klimatisierungskreislauf (16) neben der Wärmetauschervorrichtung (24) noch ein Kühler (22), nämlich ein sogenannter Chiller, ein Verdampfer (32), ein Verflüssiger (34), ein Akkumulator (36), ein Kompressor (38) und zwei Ventile (40, 42) angeordnet sind, nämlich derart, dass der Kühler (22) sowohl in dem Batteriekreislauf (8) wie auch in dem Klimatisierungskreislauf (16) angeordnet ist und analog zu der Wärmetauschervorrichtung (24) mittels des Kühlers (22) in Abhängigkeit einer Ansteuerung des Kühlmittelventils (18) und einer Ansteuerung des Ventils (40) mittels der Steuerung (4) eine Wärmeübertragungsverbindung zwischen dem Klimatisierungskreislauf (16) auf der einen Seite und dem Batteriekreislauf (8) auf der anderen Seite herstellbar oder trennbar ist, so dass der Kühler (22) in Abhängigkeit der Ansteuerung des Ventils (40) mittels der Steuerung (4) von Kältemittel durchströmbar ist oder nicht,
**dadurch gekennzeichnet,**
**dass** das Thermomanagementsystem (2) derart ausgebildet ist, dass sowohl der Wärmetauscher (30) wie auch der Kühler (22) zur Übertragung der Abwärme des Antriebskreislaufs (14), nämlich der Abwärme des Elektroantriebs (10) und der Leistungselektronik (12), und der Abwärme des Batteriekreislaufs (8), nämlich der Abwärme der Antriebsbatterie (6), zur Erwärmung des Fahrzeuginnenraums des Elektrofahrzeugs zeitgleich nutzbar sind.

2. Thermomanagementsystem (2) nach Anspruch 1,
**dadurch gekennzeichnet,**
**dass** das Thermomanagementsystem (2) zusätzlich einen kühlmittelbetriebenen Wärmetransferkreislauf (44) aufweist, wobei mindestens einer des mindestens einen Wärmetauschers (30) derart in dem Wärmetransferkreislauf (44) angeordnet ist, dass mittels dieses Wärmetauschers (30) eine Wärmeübertragungsverbindung zwischen dem in dem Wärmetransferkreislauf (44) strömenden Kühlmittel und dem Kältemittel herstellbar oder trennbar ist, und wobei der Wärmetransferkreislauf (44) mittels mindestens eines mittels der Steuerung (4) ansteuerbaren weiteren Kühlmittelventils mit dem Batteriekreislauf (8) und/oder dem Antriebskreislauf (14) kühlmittelleitend verbindbar oder trennbar ist, bevorzugt, dass das Kühlmittelventil (18) gleichzeitig als das weitere Kühlmittelventil ausgebildet ist.

3. Thermomanagementsystem (2) nach Anspruch 2,
**dadurch gekennzeichnet,**
**dass** der Wärmetransferkreislauf (44) derart ausgebildet ist, dass mittels des Wärmetransferkreislaufs (44) eine Wärmeübertragungsverbindung zwischen dem in dem Wärmetransferkreislauf (44) strömenden Kühlmittel und einer freien Umgebung herstellbar oder trennbar ist, bevorzugt, dass diese Wärmeübertragung an die freie Umgebung mittels des mindestens einen in dem Wärmetransferkreislauf (44) angeordneten Wärmetauschers (48) ermöglicht ist.

4. Thermomanagementsystem (2) nach Anspruch 3,
**dadurch gekennzeichnet,**
**dass** das Thermomanagementsystem (2) derart ausgebildet ist, dass zeitgleich Umgebungswärme aus der freien Umgebung über den Wärmetauscher (30) und Abwärme von der Antriebsbatterie (6), dem Elektroantrieb (10) und der Leistungselektronik (12) über den Kühler (22) zur Erwärmung des Fahrzeuginnenraums des Elektrofahrzeugs nutzbar sind.

5. Thermomanagementsystem (2) nach einem der Ansprüche 1 bis 4,
**dadurch gekennzeichnet,**
**dass** die Wärmetauschervorrichtung (24) und/oder das Kühlmittelventil (18) und/oder das weitere Kühlmittelventil (18) derart aufeinander abgestimmt ausgebildet sind, dass der Batteriekreislauf (8) und/oder der Antriebskreislauf (14) auf der einen Seite mittels der Wärmetauschervorrichtung (24) und des Klimatisierungskreislaufs (16) und/oder des Wärmetransferkreislaufs (44) auf der anderen Seite heizbar und/oder kühlbar sind/ist, und/oder, dass der Klimatisierungskreislauf (16) auf der einen Seite mittels der Wärmetauschervorrichtung (24) und des Batteriekreislaufs (8) und/oder des Antriebskreislaufs (14) und/oder des Wärmetransferkreislaufs (44) auf der anderen Seite heizbar und/oder kühlbar ist.

6. Thermomanagementsystem (2) nach einem der Ansprüche 1 bis 5,
**dadurch gekennzeichnet,**
**dass** das Thermomanagementsystem (2) in dem Batteriekreislauf und/oder dem Antriebskreislauf und/oder dem Klimatisierungskreislauf (16) und/oder dem Wärmetransferkreislauf mindestens eine Bypass-Vorrichtung (54) mit mindestens einer Bypass-Leitung (56) und mindestens einem ansteuerbaren Bypass-Ventil (26, 28) aufweist, wobei mittels der jeweiligen Bypass-Vorrichtung (54) ein in dem jeweiligen Kreislauf (16) angeordneter Wärmetauscher (30) in Abhängigkeit der Ansteuerung des Bypass-Ventils (26, 28) mittels der Steuerung (4) durchströmbar ist oder nicht.

7. Verfahren zum Betrieb eines Thermomanagementsystems (2) für ein Elektrofahrzeug nach einem der Ansprüche 1 bis 6, wobei in Abhängigkeit einer Ansteuerung des Kühlmittelventils (18) und einer Ansteuerung der Wärmetauschervorrichtung (24) mittels der Steuerung (4) eine Wärmeübertragungsverbindung zwischen dem Batteriekreislauf (8) und/oder dem Antriebskreislauf (14) auf der einen Seite und dem Klimatisierungskreislauf (16) auf der anderen Seite mittels der mindestens einen Wärmetauschervorrichtung (24) hergestellt oder getrennt wird, nämlich derart, dass der Wärmetauscher (30) in Abhängigkeit der Ansteuerung des Kältemittelventils (26, 28) mittels der Steuerung (4) von Kältemittel durchströmt wird oder nicht, und wobei analog zu der Wärmetauschervorrichtung (24) mittels des Kühlers (22) in Abhängigkeit einer Ansteuerung des Kühlmittelventils (18) und einer Ansteuerung des Ventils (40) mittels der Steuerung (4) eine Wärmeübertragungsverbindung zwischen dem Klimatisierungskreislauf (16) auf der einen Seite und dem Batteriekreislauf (8) auf der anderen Seite hergestellt oder getrennt wird, so dass der Kühler (22) in Abhängigkeit der Ansteuerung des Ventils (40) mittels der Steuerung (4) von Kältemittel durchströmt wird oder nicht,
**dadurch gekennzeichnet,**
**dass** sowohl der Wärmetauscher (30) wie auch der Kühler (22) zur Übertragung der Abwärme des Antriebskreislaufs (14), nämlich der Abwärme des Elektroantriebs (10) und der Leistungselektronik (12), und der Abwärme des Batteriekreislaufs (8), nämlich der Abwärme der Antriebsbatterie (6), zur Erwärmung des Fahrzeuginnenraums des Elektrofahrzeugs zeitgleich genutzt werden.

8. Verfahren nach Anspruch 7,
**dadurch gekennzeichnet,**
**dass** zeitgleich Umgebungswärme aus der freien Umgebung über den Wärmetauscher (30) und Abwärme von der Antriebsbatterie (6), dem Elektroantrieb (10) und der Leistungselektronik (12) über den Kühler (22) zur Erwärmung des Fahrzeuginnenraums des Elektrofahrzeugs genutzt werden.

9. Verfahren nach Anspruch 7 oder 8,
**dadurch gekennzeichnet,**
**dass** mittels einer Ansteuerung des weiteren Kühlmittelventils (18) mittels der Steuerung (4) der Wärmetransferkreislauf (44) mit dem Batteriekreislauf (8) und/oder dem Antriebskreislauf (14) kühlmittelleitend verbunden oder getrennt wird.

10. Verfahren nach einem der Ansprüche 7 bis 9,
**dadurch gekennzeichnet,**
**dass** in Abhängigkeit einer Ansteuerung des Bypass-Ventils (26, 28) ein in dem jeweiligen Kreislauf (16) mit Bypass-Vorrichtung (54) angeordneter Wärmetauscher (30) durchströmt wird oder nicht.

11. Verfahren nach einem der Ansprüche 7 bis 10,
**dadurch gekennzeichnet,**
**dass** die Ansteuerung des Kühlmittelventils (18) und/oder der Wärmetauschervorrichtung (24) und/oder des weiteren Kühlmittelventils (18) und/oder des Bypass-Ventils (26, 28) und/oder einer mittels der Steuerung (4) ansteuerbaren Pumpe (13, 23, 46) in einem der genannten Kühlmittelkreisläufe (8, 14, 44) zur Förderung des Kühlmittels in diesem Kühlmittelkreislauf (8, 14, 44) in Abhängigkeit eines Fahrzeugzustands des Elektrofahrzeugs und/oder eines Fahrzustands des Elektrofahrzeugs und/oder mindestens einer Umgebungsbedingung der freien Umgebung erfolgt.

## Claims

1. Thermal management system (2) for an electric vehicle, comprising a control unit (4), a battery circuit (8) connected in a heat-transferring manner to a traction battery (6) of the electric vehicle, a drive circuit (14) connected in a heat-transferring manner to an electric drive (10) of the electric vehicle and/or to power electronics (12) for an electric drive (10), and an air conditioning circuit (16) connected in a heat-transferring manner to a vehicle interior of the electric vehicle, wherein, on the one hand the battery circuit (8) and the drive circuit (14) can each be operated with a coolant and can be connected to one another in a coolant-conducting manner or separated from one another by means of a controllable coolant valve (18), and on the other hand the air conditioning circuit (16) can be operated with a refrigerant different from the coolant, and in which a heat transfer connection between the battery circuit (8) and/or the drive circuit (14) on the one side and the air conditioning circuit (16) on the other side can be established or separated by means of at least one heat exchanger device (24) of the thermal management system (2), depending on an actuation of a coolant valve (18) and an actuation of the heat exchanger device (24) by means of the control unit (4) in such a way that the heat exchanger device (24) has at least one refrigerant valve (26, 28) and at least one heat exchanger (30), whereby refrigerant can flow through said heat exchanger (30) or not, depending on the actuation of the refrigerant valve (26, 28) by means of the control unit (4), and whereby in addition to the heat exchanger device (24) a cooler (22), namely a so-called chiller, an evaporator (32), a condenser (34), an accumulator (36), a compressor (38) and two valves (40, 42) are arranged in the air conditioning circuit (16) in such a way that the cooler (22) is arranged in both the battery circuit (8) and the air conditioning circuit (16) and, analogous to the heat exchanger device (24), a heat transfer connection between the air conditioning circuit (16) on the one side and the battery circuit (8) on the other side can be established or separated by means of the cooler (22), depending on an actuation of the coolant valve (18) and an actuation of the valve (40) by means of the control unit (4), so that the refrigerant can flow through the cooler (22) or not, depending on the actuation of the valve (40) by the control unit (4), **characterized in that**,
the thermal management system (2) is designed in such a way that both the heat exchanger (30) and the cooler (22) can be used at the same time to transfer the waste heat from the drive circuit (14), namely the waste heat from the electric drive (10) and the power electronics (12), and the waste heat from the battery circuit (8), namely the waste heat from the traction battery (6), to heat the vehicle interior of the electric vehicle.

2. Thermal management system (2) according to claim 1,
**characterized in that**,
the thermal management system (2) additionally has a coolant-operated heat transfer circuit (44), at least one of the at least one heat exchanger (30) being arranged in the heat transfer circuit (44) in such a way that by means of this heat exchanger (30), a heat transfer connection can be established or separated between the coolant flowing in the heat transfer circuit (44) and the refrigerant, and in which the heat transfer circuit (44) can be connected to or disconnected from the battery circuit (8) and/or the drive circuit (14) in a coolant-conducting manner by means of at least one further coolant valve that can be actuated by the control unit (4), preferably **in that** the coolant valve (18) is simultaneously designed as the further coolant valve.

3. Thermal management system (2) according to claim 2,
**characterized in that**,
the heat transfer circuit (44) is designed in such a way that, by means of the heat transfer circuit (44), a heat transfer connection can be established or separated between the coolant flowing in the heat transfer circuit (44) and a free environment, preferably in such a way that this heat transfer to the free environment is enabled by the at least one heat exchanger (48) arranged in the heat transfer circuit (44).

4. Thermal management system (2) according to claim 3,
**characterized in that**,
the thermal management system (2) is designed in such a way that ambient heat from the free environment coming via the heat exchanger (30) and waste heat from the traction battery (6), the electric drive (10) and the power electronics (12) coming via the cooler (22) can be used at the same time to heat the vehicle interior of the electric vehicle.

5. Thermal management system (2) according to one of claims 1 through 4,
**characterized in that**,
the heat exchanger device (24) and/or the coolant valve (18) and/or the further coolant valve (18) are matched to one another in such a way that the battery circuit (8) and/or the drive circuit (14) can be heated and/or cooled on the one side by means of the heat exchanger device (24) and the air conditioning circuit (16) and/or by means of the heat transfer circuit (44) on the other side, and/or that the air conditioning circuit (16) can be heated and/or cooled on the one side by means of the heat exchanger device (24) and the battery circuit (8) and/or by means of the drive circuit (14) and/or the heat transfer circuit (44) on the other side.

6. Thermal management system (2) according to one of claims 1 through 5,
**characterized in that**,
the thermal management system (2) has at least one bypass device (54) with at least one bypass line (56) and at least one controllable bypass valve (26, 28) in the battery circuit and/or the drive and/or the air conditioning circuit (16) and/or the heat transfer circuit such that by means of the respective bypass device (54), a flow can be enabled or prevented in the heat exchanger (30) located in the respective circuit (16), depending on the actuation of the bypass valve (26, 28) by means of the control unit (4).

7. Method for operating a thermal management system (2) for an electric vehicle according to one of claims 1 to 6 in which a heat transfer connection between the battery circuit (8) and/or the drive (14) on the one side and the air conditioning circuit (16) on the other side, can be established or separated by means of at the least one heat exchanger device (24), depending on an actuation of the coolant valve (18) and an actuation of the heat exchanger device (24) by means of the control unit (4) in such a way that, depending on the actuation of the refrigerant valve (26, 28) by means of the control unit (4), refrigerant can flow through said heat exchanger (30) or not, and analogously to the heat exchanger device (24), a heat transfer connection between the air conditioning circuit (16) on the one side and the battery circuit (8) on the other side can be established or separated by means of the cooler (22), depending on an actuation of the coolant valve (18) and an actuation of the valve (40) by means of the control unit (4), so that the refrigerant can flow through the cooler (22) or not, depending on the actuation of the valve (40) by the control unit (4),
**characterized in that**,
both the heat exchanger (30) and the cooler (22) are used at the same time to transfer the waste heat from the drive circuit (14), namely the waste heat from the electric drive (10) and the power electronics (12), and the waste heat from the battery circuit (8), namely the waste heat from the traction battery (6), to heat the vehicle interior of the electric vehicle.

8. Method according to claim 7,
**characterized in that**,
ambient heat from the free environment coming via the heat exchanger (30) and waste heat from the traction battery (6), the electric drive (10) and the power electronics (12) coming via the cooler (22) are used at the same time to heat the vehicle interior of the electric vehicle.

9. Method according to claim 7 or 8,
**characterized in that**,
the heat transfer circuit (44) can be connected to or disconnected from the battery circuit (8) and/or the drive circuit (14) in a coolant-conducting manner by means of an actuation of the further coolant valve (18) my means of the control unit (4).,

10. Method according to one of claims 7 through 9,
**characterized in that**,
a flow can be enabled or prevented in a heat exchanger (30) located in the respective circuit (16) with bypass device (54), depending on the actuation of the bypass valve (26, 28).

11. Method according to one of claims 7 through 10,
**characterized in that**,
the activation of the coolant valve (18) and/or the heat exchanger device (24) and/or the further coolant valve (18) and/or the bypass valve (26, 28) and/or a pump (13, 23, 46) which can be activated by the control unit (4) in one of said coolant circuits (8, 14, 44) takes place in order to convey the coolant in this coolant circuit (8, 14, 44) as a function of a vehicle condition of the electric vehicle and/or of a driving state of the electric vehicle and/or of at least one ambient condition of the free environment.

## Revendications

1. Système de gestion thermique (2) pour un véhicule électrique comprenant une commande (4), un circuit de batterie (8) relié par transmission thermique à une batterie d'entraînement (6) du véhicule électrique, un circuit d'entraînement (14) relié par transmission thermique à un entraînement électrique (10) du véhicule électrique et/ou à une électronique de puissance (12) pour un entraînement électrique (10) et un circuit de climatisation (16) relié par transmission thermique à un habitacle du véhicule électrique, dans lequel, d'une part, le circuit de batterie (8) et le circuit d'entraînement (14) peuvent fonctionner chacun avec un fluide de refroidissement et peuvent être reliés ou séparés l'un de l'autre par une conduite de fluide de refroidissement au moyen d'au moins une soupape de liquide de refroidissement pilotable (18) et, d'autre part, le circuit de climatisation (16) peut fonctionner avec un fluide frigorigène différent du fluide de refroidissement, et dans lequel une liaison de transmission thermique entre le circuit de batterie (8) et/ou le circuit d'entraînement (14) d'un côté et le circuit de climatisation (16) de l'autre côté peut être établie ou séparée au moyen d'au moins un dispositif d'échangeur thermique (24) du système de gestion thermique (2) en fonction d'une commande de la soupape de liquide de refroidissement (18) et d'une commande du dispositif d'échangeur thermique (24) au moyen de la commande (4), et ce, de manière à ce que le dispositif d'échangeur thermique (24) présente au moins une soupape de fluide frigorigène (26, 28) et au moins un échangeur thermique (30), l'échangeur thermique (30) pouvant être traversé ou non par le fluide frigorigène en fonction de la commande de la soupape de fluide frigorigène (26, 28) au moyen de la commande (4), et dans lequel le circuit de climatisation (16) comporte, outre le dispositif d'échangeur thermique (24), un refroidisseur (22), appelé chiller, un évaporateur (32), un condenseur (34), un accumulateur (36), un compresseur (38) et deux soupapes (40, 42), disposés de manière à ce que le refroidisseur (22) soit intégré aussi bien dans le circuit de batterie (8) que dans le circuit de climatisation (16) et que, de manière analogue au dispositif d'échangeur thermique (24), une liaison de transmission thermique entre le circuit de climatisation (16) d'un côté et le circuit de batterie (8) de l'autre côté puisse être établie ou séparée au moyen du refroidisseur (22) en fonction d'une commande de la vanne de fluide frigorigène (18) et d'une commande de la soupape (40) au moyen de la commande (4), de manière à ce que le refroidisseur (22) soit traversé ou non par le fluide frigorigène en fonction de la commande de la soupape (40) au moyen de la commande (4), **caractérisé en ce que**
le système de gestion thermique (2) est conçu de manière à qu'aussi bien l'échangeur thermique (30) que le refroidisseur (22) puissent être utilisés simultanément pour transmettre la chaleur perdue du circuit d'entraînement (14), à savoir la chaleur perdue de l'entraînement électrique (10) et de l'électronique de puissance (12), et la chaleur perdue du circuit de batterie (8), à savoir la chaleur perdue de la batterie d'entraînement (6), pour chauffer l'habitacle du véhicule électrique.

2. Système de gestion thermique (2) selon la revendication 1,
**caractérisé en ce que**
le système de gestion thermique (2) présente en outre un circuit de transmission thermique (44) fonctionnant au moyen d'un liquide de refroidissement, au moins un échangeur thermique (30) étant monté dans le circuit de transmission thermique (44) de manière à ce qu'une liaison de transmission thermique entre le liquide de refroidissement circulant dans le circuit de transmission thermique (44) et le fluide frigorigène puisse être établie ou séparée au moyen de cet échangeur thermique (30), et le circuit de transmission thermique (44) pouvant être relié ou séparé du circuit de batterie (8) et/ou du circuit d'entraînement (14) par une conduite de réfrigérant au moyen d'au moins une autre soupape de fluide frigorigène pouvant être commandée au moyen de la commande (4), de préférence **en ce que** la soupape de fluide frigorigène (18) est conçue simultanément comme autre soupape de fluide frigorigène.

3. Système de gestion thermique (2) selon la revendication 2,
**caractérisé en ce que**
le circuit de transmission thermique (44) est conçu de manière à ce qu'au moyen du circuit de transmission thermique (44), une liaison de transmission thermique puisse être établie ou séparée entre le liquide de refroidissement s'écoulant dans le circuit de transmission thermique (44) et un environnement libre, de préférence **en ce que** cette transmission thermique à l'environnement libre est rendue possible au moyen d'au moins un échangeur thermique (48) monté dans le circuit de transmission thermique (44).

4. Système de gestion thermique (2) selon la revendication 3,
**caractérisé en ce que**
le système de gestion thermique (2) est conçu de telle sorte que la chaleur ambiante provenant de l'environnement libre par l'intermédiaire de l'échangeur thermique (30) et la chaleur perdue de la batterie d'entraînement (6), de l'entraînement électrique (10) et de l'électronique de puissance (12) par l'intermédiaire du refroidisseur (22) peuvent être utilisées simultanément pour chauffer l'habitacle du véhicule électrique.

5. Système de gestion thermique (2) selon l'une des revendications 1 à 4,
**caractérisé en ce que**
le dispositif d'échangeur thermique (24) et/ou la soupape de liquide de refroidissement (18) et/ou l'autre soupape de liquide de refroidissement (18) sont conçus l'un par rapport à l'autre de manière à ce que le circuit de batterie (8) et/ou le circuit d'entraînement (14) d'un côté puisse être chauffé et/ou refroidi au moyen du dispositif d'échangeur thermique (24) et du circuit de climatisation (16) et/ou du circuit de transmission thermique (44) de l'autre côté, et/ou **en ce que** le circuit de climatisation (16) peut être chauffé et/ou refroidi d'un côté au moyen du dispositif d'échangeur thermique (24) et du circuit de batterie (8) et/ou du circuit d'entraînement (14) et/ou du circuit de transmission thermique (44) de l'autre côté.

6. Système de gestion thermique (2) selon l'une des revendications 1 à 5,
**caractérisé en ce que**
le système de gestion thermique (2) comporte, dans le circuit de batterie et/ou le circuit d'entraînement et/ou le circuit de climatisation (16) et/ou le circuit de transmission thermique, au moins un dispositif de dérivation (54) avec au moins une conduite de dérivation (56) et au moins une vanne de dérivation pilotable (26, 28), un échangeur thermique (30) monté dans le circuit respectif (16) pouvant être traversé ou non au moyen du dispositif de dérivation respectif (54) en fonction de la commande de la vanne de dérivation (26, 28) avec la commande (4).

7. Procédé pour l'utilisation d'un système de gestion thermique (2) pour un véhicule électrique selon l'une des revendications 1 à 6, dans lequel, en fonction d'une commande de la soupape de liquide de refroidissement (18) et d'une commande du dispositif d'échangeur thermique (24) avec la commande (4), une liaison de transmission thermique entre le circuit de batterie (8) et/ou le circuit de propulsion (14) d'un côté et le circuit de climatisation (16) de l'autre côté est établie ou interrompue au moyen d'au moins un dispositif d'échangeur thermique (24), à savoir de manière à ce que l'échangeur thermique (30), en fonction de la commande de la soupape de fluide frigorigène (26, 28) avec la commande (4) soit parcouru ou non par le fluide frigorigène, et dans lequel, de manière analogue au dispositif d'échangeur thermique (24), une liaison de transmission thermique entre le circuit de climatisation (16) d'un côté et le circuit de batterie (8) de l'autre côté est établie ou interrompue au moyen du refroidisseur (22) en fonction d'une commande de la vanne de fluide frigorigène (18) et d'une commande de la soupape (40) avec la commande (4), de sorte que le radiateur (22) est traversé ou non par le fluide frigorigène en fonction de la commande de la soupape (40) avec la commande (4), **caractérisé en ce que**
aussi bien l'échangeur thermique (30) que le refroidisseur (22) peuvent être utilisés simultanément pour transmettre la chaleur perdue du circuit d'entraînement (14), à savoir la chaleur perdue de l'entraînement électrique (10) et de l'électronique de puissance (12), et la chaleur perdue du circuit de batterie (8), à savoir la chaleur perdue de la batterie d'entraînement (6), pour chauffer l'habitacle du véhicule électrique.

8. Procédé selon la revendication 7,
**caractérisé en ce que**
la chaleur ambiante provenant de l'environnement libre par l'intermédiaire de l'échangeur thermique (30) et la chaleur perdue de la batterie d'entraînement (6), de l'entraînement électrique (10) et de l'électronique de puissance (12) par l'intermédiaire du refroidisseur (22) peuvent être utilisées simultanément pour chauffer l'habitacle du véhicule électrique.

9. Procédé selon la revendication 7 ou 8,
**caractérisé en ce que**
au moyen d'une commande de l'autre soupape de fluide frigorigène (18) avec la commande (4), le circuit de transmission thermique (44) est connecté ou séparé du circuit de batterie (8) et/ou du circuit d'entraînement (14) par une conduite de liquide de refroidissement.

10. Procédé selon l'une des revendications 7 à 9,
**caractérisé en ce que**
en fonction d'une commande de la vanne de dérivation (26, 28), un échangeur thermique (30) monté dans le circuit respectif (16) avec dispositif de dérivation (54) est traversé ou non.

11. Procédé selon l'une des revendications 7 à 10,
**caractérisé en ce que**
la commande de la soupape de liquide de refroidissement (18) et/ou du dispositif d'échangeur thermique (24) et/ou de l'autre soupape de liquide de refroidissement (18) et/ou de la soupape de dérivation (26, 28) et/ou d'une pompe (13, 23, 46) pouvant être commandée au moyen de la commande (4) dans l'un desdits circuits de liquide de refroidissement (8, 14, 44) pour refouler le liquide de refroidissement dans ce circuit de liquide de refroidissement (8, 14, 44) s'effectue en fonction d'un état du véhicule électrique et/ou d'un état de conduite du véhicule électrique et/ou d'au moins une condition environnementale de l'environnement libre.
